# EUROPÄISCHE PATENTANMELDUNG

(11) **EP 4 421 025 A1**
(43) Veröffentlichungstag der Anmeldung: **28.08.2024**
(21) Anmeldenummer: 24156146.3
(22) Anmeldetag: 06.02.2024
(51) Int. Cl.: C01B 3/06, B01J 8/00, B01J 19/12, C01B 3/50, C01B 32/40

(54) **VORRICHTUNG UND VERFAHREN ZUM DURCHFÜHREN EINES REDOXKREISPROZESSES**

(30) Priorität: 27.02.2023 DE 102023104686
(71) Anmelder: Deutsches Zentrum für Luft- und Raumfahrt e.V., 53227 Bonn (DE)
(72) Erfinder: Grobbel, Johannes, 52428 Jülich (DE)
(74) Vertreter: RPK Patentanwälte Reinhardt und Kaufmann Partnerschaft mbB

(57) **Zusammenfassung**

Die Erfindung betrifft eine Vorrichtung (100) und ein Verfahren zum Durchführen eines Redox-Kreisprozesses mit einem ersten Kreislauf (1) für ein erstes Wärmeträgermedium (4) und einem zweiten Kreislauf (2) für ein Spülgas (6) als zweitem Wärmeträgermedium. Der erste Kreislauf (1) führt in Strömungsrichtung des ersten Wärmeträgermediums (4) durch wenigstens einen ersten Wärmeübertrager (20), einen Hauptstrahlungsempfänger (10), einen zweiten Wärmeübertrager (30) und einen Oxidationsreaktor (40). Der zweite Kreislauf (2) verläuft zwischen dem ersten und zweiten Wärmeübertrager (20, 30) in einer Leitung, die am Hauptstrahlungsempfänger (10) vorbei geführt ist und in Strömungsrichtung des zweiten Wärmeträgermediums vom zweiten Wärmeübertrager (30) zum ersten Wärmeübertrager (20) führt. Der zweite Kreislauf (2) ist mit dem ersten Kreislauf (1) an dem ersten Wärmeübertrager (20) und/oder an dem zweiten Wärmeübertrager (30) gekoppelt, wobei das erste Wärmeträgermedium (4) von dem zweiten Wärmeträgermedium durchströmt.

## Beschreibung

### Stand der Technik

Die Erfindung betrifft eine Vorrichtung zum Durchführen eines Redox-Kreisprozesses sowie ein Verfahren zum Durchführen eines Redox-Kreisprozesses mit einer solchen Vorrichtung.

Redox-Kreisprozesse, die von konzentrierterer Solarstrahlung angetrieben werden, erlauben eine emissionsarme Herstellung von Wasserstoff, Kohlenmonoxid oder Synthesegas. In den Prozessen wird üblicherweise ein Metalloxid, das sogenannte Redoxmaterial, bei hohen Temperaturen reduziert, um anschließend bei niedrigeren Temperaturen wieder auf einen höheren Oxidationsgrad oxidiert zu werden. Als Oxidator wird Wasser, Kohlendioxid oder eine Mischung dieser Stoffe eingesetzt, sodass Wasserstoff, Kohlenmonoxid oder Synthesegas entsteht. Um das Redox-Material möglichst weit zu reduzieren, sollte im Reduktionsschritt eine hohe Temperatur und ein niedriger Sauerstoffpartialdruck herrschen. Die Verringerung des Sauerstoffpartialdruckes kann entweder durch ein Verringern des Gesamtdrucks (Vakuumbetrieb) oder durch Verdünnung mit einem Spülgas erreicht werden.

Technische Umsetzungen dieses Prozesses lassen sich in Systeme mit örtlich festem Redox-Material und in Systeme mit beweglichem Redox-Material unterteilen. Während Systeme der ersten Gruppe im größeren Maßstab bis zu 750 kW demonstriert wurden und aktuell die höchsten demonstrierten Wirkungsgrade aufweisen, versprechen Systeme der zweiten Gruppe perspektivisch höhere Wirkungsgrade.

In den Systemen mit festem Redox-Material wird die Oxidation und Reduktion am gleichen Ort ausgeführt, aber zeitlich hintereinander, es gibt also einen Batchbetrieb. Da die Reduktion stark endotherm und die Oxidation leicht exotherm ist, muss entsprechend konzentrierte Solarleistung zyklisch variiert werden. Der Reaktorraum ist ein Kompromiss für beide Reaktionsschritte und unterliegt zyklischen thermischen Belastungen.

Sowohl bei den Systemen mit festem Redox-Material als auch bei Systemen mit beweglichem Redox-Material wird die Reduktion im Hauptstrahlungsempfänger durchgeführt, d.h. das Redox-Material muss gleichzeitig bestrahlt, aber auch in einer entsprechenden Atmosphäre mit niedrigem Sauerstoffpartialdruck gehalten werden. Daher werden üblicherweise im Hauptstrahlungsempfänger Fenster aus Quarzglas verwendet, die gekühlt werden müssen.

Wichtig für einen effizienten Prozess ist die Rückgewinnung der sensiblen Wärme des Redox-Materials zwischen Reduktions- und Oxidationsschritt. Dies ist insbesondere bei einem Redox-Material in Blockstruktur schwierig, da hohe Temperaturgradienten im Material auftreten und Ventile und Gastrenneinrichtungen für sehr hohe Temperaturen nötig sind.

Aus der DE 102019121868 A1 ist ein Verfahren zur Durchführung eines Redox-Kreisprozesses bekannt, bei dem folgende Schritte vorgesehen sind: Erhitzen eines Oxidmaterials zur Durchführung eines Reduktionsvorgangs, wobei während des Reduktionsvorgangs ein Spülgas dem Oxidmaterial zugeführt wird; Ableiten von erhitztem Spülgas; Zuführen von Wasserdampf und/oder Kohlendioxid zu dem reduzierten Oxidmaterial, wobei das reduzierte Oxidmaterial zu Oxidmaterial oxidiert und Wasserstoff und/oder Kohlenmonoxid freigesetzt wird; Wiederholen der Schritte zur Bildung eines Kreisprozesses, wobei das erhitzte Spülgas dem Oxidmaterial vor dem ersten Schritt zur Vorwärmung des Oxidmaterials zugeführt wird.

### Offenbarung der Erfindung

Die Aufgabe der Erfindung ist es, eine verbesserte Vorrichtung zum Durchführen eines Redox-Kreisprozesses zu schaffen.

Eine weitere Aufgabe der Erfindung ist es, ein effektives Verfahren zum Durchführen eines Redox-Kreisprozesses mit einer solchen verbesserten Vorrichtung anzugeben.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Nach einem Aspekt der Erfindung wird eine Vorrichtung zum Durchführen eines Redox-Kreisprozesses vorgeschlagen mit einem ersten Kreislauf für ein erstes Wärmeträgermedium und einem zweiten Kreislauf für ein Spülgas als zweitem Wärmeträgermedium. Der erste Kreislauf führt in Strömungsrichtung des ersten Wärmeträgermediums durch wenigstens einen ersten Wärmeübertrager, einen Hauptstrahlungsempfänger, einen zweiten Wärmeübertrager und einen Oxidationsreaktor. Der zweite Kreislauf verläuft zwischen dem ersten und zweiten Wärmeübertrager in einer Leitung, die am Hauptstrahlungsempfänger vorbei geführt ist und in Strömungsrichtung des zweiten Wärmeträgermediums vom zweiten Wärmeübertrager zum ersten Wärmeübertrager führt. Der zweite Kreislauf ist mit dem ersten Kreislauf an dem ersten Wärmeübertrager und/oder an dem zweiten Wärmeübertrager gekoppelt. Dabei ist das erste Wärmeträgermedium von dem zweiten Wärmeträgermedium durchströmt.

Vorteilhaft kann das erste Wärmeträgermedium ein Oxidmaterial als Redoxmaterial, insbesondere ein Metalloxid, insbesondere Ceroxid, aufweisen und fließfähig oder rieselfähig sein. Insbesondere kann dabei das erste Wärmeträgermedium durch Partikel gebildet sein. Das Spülgas kann ein Inertgas, insbesondere Stickstoff, sein. Das Redoxmaterial wird bei hohen Temperaturen reduziert, um anschließend bei niedrigeren Temperaturen wieder auf einen höheren Oxidationsgrad oxidiert zu werden.

Bei der vorgeschlagenen Vorrichtung wird das bewegliche Redox-Material des Redox-Kreisprozesses in dem ersten Kreislauf geführt, während das Spülgas zur Reduzierung des Sauerstoffpartialdrucks in dem zweiten Kreislauf geführt wird. Die beiden Kreisläufe sind weitestgehend getrennt geführt. Insbesondere führt der zweite Kreislauf mit dem Spülgas nicht durch den Hauptstrahlungsempfänger.

Die beiden Kreisläufe sind nur an dem zweiten Wärmeübertrager, nämlich zur Reduktion des ersten Wärmeträgermediums, wo auch Wärme von dem ersten Wärmeträgermedium auf das Spülgas übertragen wird, sowie an dem ersten Wärmeübertrager zum Vorwärmen des ersten Wärmeträgermediums durch das erhitzte Spülgas, bevor das erste Wärmeträgermedium in den Hauptstrahlungsempfänger geleitet wird, miteinander gekoppelt.

Das Spülgas hat somit auch die Funktion eines Wärmeträgers. Somit kann der Redox-Kreisprozess in besonders vorteilhafter Weise durchgeführt werden, da der in herkömmlichen Verfahren kritisierte hohe Spülgasstrom durch die Doppelfunktion des Spülgases effektiver genutzt werden kann. Darüber hinaus kann die bisher ungenutzte Wärmeenergie in dem Spülgas ebenfalls genutzt werden. Bei dem Redox-Prozess wird somit sensible Wärme des reduzierten Oxidmaterials als erstes Wärmeträgermedium und des Spülgases rückgewonnen.

Der Reduktionsschritt des ersten Wärmeträgermediums findet so vorteilhaft nicht im Hauptstrahlungsempfänger statt, sondern nachgelagert in einem bewegten, von dem Spülgas durchströmten, Partikelbett des ersten Wärmeträgermediums im zweiten Wärmeübertrager.

Eine Drucktrennung zwischen dem Hauptstrahlungsempfänger und dem reagierenden und bewegten Partikelbett findet dabei nicht über Ventile oder ähnliche mechanische Absperreinrichtungen statt, sondern günstigerweise über ein dichtes Partikelbett, das in einem Rohr mit engem Querschnitt in das reagierende, bewegte Partikelbett mit breitem Querschnitt fließt. Um Gase wie gewünscht fließen zu lassen, können die Querschnittsflächen der bewegten Partikelbetten entsprechend gestaltet werden.

Vorteilhaft weist der Hauptstrahlungsempfänger daher kein Fenster auf. Der Hauptstrahlungsempfänger kann beispielsweise als sogenannter Cavity-Receiver mit einer geneigten Gleitfläche, mit einem Horizontalförderer wie beispielsweise in der DE 102016216733 B4 beschrieben, oder mit einer Kombination dieser beiden Einrichtungen als beschleunigbare geneigte Gleitfläche ausgeführt werden.

Weiter kann zweckmäßigerweise ein Sekundärkonzentrator verwendet werden, welcher das Sonnenlicht zusätzlich über Spiegel in die Apertur des Hauptstrahlungsempfängers leitet.

Weitere Strahlungsleistung, welche nicht in die Apertur des Hauptstrahlungsempfängers fällt, auch Spillage genannt, kann günstigerweise über einen optionalen Nebenstrahlungsempfänger im Prozess verwendet werden.

Simulationsrechnungen haben einen Wirkungsgrad von bis zu 27 % aufgewiesen, der deutlich über dem Stand der Technik liegt.

Nach einer vorteilhaften Ausgestaltung der Vorrichtung kann im ersten Kreislauf der erste Wärmeübertrager in Strömungsrichtung des ersten Wärmeträgermediums stromaufwärts vor dem Hauptstrahlungsempfänger angeordnet sein. Mittels des ersten Wärmeübertragers kann das erste Wärmeträgermedium, bevor dieses in den Hauptstrahlungsempfänger geleitet wird, durch das erhitzte Spülgas vorgewärmt werden. Die Durchströmung des bewegten Partikelbetts des ersten Wärmeträgermediums in dem ersten Wärmeübertrager, hat nicht nur zur Folge, dass das erste Wärmeträgermedium vorgewärmt wird, sondern aufgrund der Erwärmung des ersten Wärmeträgermediums und der durch das Spülgas hervorgerufenen Herabsetzung des Sauerstoffpartialdrucks kann bereits vor der Erwärmung des ersten Wärmeträgermediums im Hauptstrahlungsempfänger eine teilweise Reduktion des ersten Wärmeträgermediums stattfinden.

Nach einer vorteilhaften Ausgestaltung der Vorrichtung kann im ersten Kreislauf der zweite Wärmeübertrager in Strömungsrichtung des ersten Wärmeträgermediums stromabwärts nach dem Hauptstrahlungsempfänger angeordnet sein und zur chemischen Reduktion des ersten Wärmeträgermediums ausgebildet sein.

Das als Oxidmaterial ausgebildete erste Wärmeträgermedium kann in besonders effizienter Art und Weise in dem Hauptstrahlungsempfänger auf die für die Reduktion des ersten Wärmeträgermediums notwendigen sehr hohen Temperaturen erhitzt werden. Die Erhitzung mit Solarstrahlung kann dabei direkt oder indirekt erfolgen. Dem erhitzten ersten Wärmeträgermedium kann im zweiten Wärmeübertrager zur Reduktion des Oxidmaterials zu einem reduzierten Oxidmaterial kontinuierlich Spülgas zugeführt und erhitztes Spülgas für eine Wärmerückgewinnung und/oder Vorwärmung des ersten Wärmeträgermediums, bevor dieses in den Hauptstrahlungsempfänger geleitet wird, abgeführt werden.

Das reduzierte Oxidmaterial wird dabei abgekühlt. Darüber hinaus hat das Durchströmen des Spülgases durch das bewegte Partikelbett des reduzierten Oxidmaterials im zweiten Wärmeübertrager den Vorteil, dass eine Rück-Oxidation des reduzierten Oxidmaterials einerseits durch die Abkühlung und andererseits durch das Herabsetzen des Sauerstoffpartialdrucks vermieden bzw. verringert werden kann.

Nach einer vorteilhaften Ausgestaltung der Vorrichtung kann im ersten Kreislauf der Oxidationsreaktor in Strömungsrichtung des ersten Wärmeträgermediums stromabwärts nach dem zweiten Wärmeübertrager angeordnet sein und zum Oxidieren des ersten Wärmeträgermediums ausgebildet sein. Der Oxidationsreaktor kann vorteilhaft so ausgebildet sein, dass darin keine oder nur geringe Verluste erfolgen. Beispielsweise kann die Umgebung, an die hohen Temperaturen und das damit einhergehende Risiko von Energieverlusten angepasst sein. Beispielsweise kann der Oxidationsprozess in einem geschlossenen Reaktor erfolgen, der lediglich Öffnungen für die Zu- und Abfuhr des reduzierten Oxidmaterials und ggfs. für Wasserstoff und/oder Kohlenmonoxid und/oder das Spülgas hat, erfolgen, wodurch Verluste durch Wärmestrahlung vermieden werden können.

Der Oxidationsreaktor kann vorteilhaft weitestgehend unabhängig vom als Reduktionsreaktor ausgebildeten zweiten Wärmeübertrager gestaltet sein. Vorteilhaft können verschiedene Materialien entsprechend den jeweiligen Prozessbedingungen eingesetzt werden.

Im Oxidationsreaktor kann günstigerweise Stahl eingesetzt werden, während im Hauptstrahlungsempfänger und zweiten Wärmeübertrager auch keramische Materialien eingesetzt werden können.

Außerdem kann die Strömungsführung auf die Oxidationsreaktion optimiert werden. Spülgas braucht in der Regel nicht in den Oxidationsreaktor geleitet werden. Jedoch kann es für Anfahrvorgänge und Abfahrvorgänge der Vorrichtung und für die Wartung günstig sein, Spülgas durch den Oxidationsreaktor zu leiten.

Vorteilhaft kann der Oxidationsreaktor eine Zufuhr für Oxidatorgas, insbesondere Wasser und/oder Kohlendioxid, aufweisen. Weiter kann der Oxidationsreaktor einen Ausgang für ein Produktgas, insbesondere Wasserstoff, oder Kohlenmonoxid, oder Synthesegas, aufweisen.

Nach einer vorteilhaften Ausgestaltung der Vorrichtung kann im zweiten Kreislauf eine Reinigungseinheit zum Reinigen des Spülgases in Strömungsrichtung des zweiten Wärmeträgermediums stromaufwärts vor dem zweiten Wärmeübertrager angeordnet sein. Insbesondere kann dabei die Reinigungseinheit eine keramische Membran aufweisen.

Vorteilhaft kann der zweite Kreislauf eine Einrichtung, insbesondere ein Gebläse, zum Fördern des Spülgases in den zweiten Wärmeübertrager aufweisen. So kann die Strömungsgeschwindigkeit des Spülgases im zweiten Kreislauf je nach Anforderung für den Redox-Kreisprozess günstig eingestellt werden.

Nach einer vorteilhaften Ausgestaltung der Vorrichtung kann der Hauptstrahlungsempfänger einen Zufuhrbereich zum Zuführen des ersten Wärmeträgermediums zum Hauptstrahlungsempfänger und einen Abfuhrbereich zum Ableiten des erhitzten ersten Wärmeträgermediums aus dem Hauptstrahlungsempfänger sowie eine Apertur für den Eintritt von Solarstrahlung in den Hauptstrahlungsempfänger aufweisen. Insbesondere der Abfuhrbereich kann als enges Rohr mit kleinem Querschnitt ausgebildet sein, sodass nur geringe Stoffströme des zweiten Wärmeträgermediums bei entsprechend hohem Strömungswiderstand fließen.

Nach einer vorteilhaften Ausgestaltung der Vorrichtung können im ersten Kreislauf ein oder mehrere Einrichtungen zur Beeinflussung des Durchflusses des ersten Wärmeträgermediums durch den Hauptstrahlungsempfänger angeordnet sein. Die Einrichtungen können beispielsweise als Schieber ausgebildet sein, welche den Stoffstrom des ersten Wärmeträgermediums beeinflussen können. Eine solche Einrichtung kann günstigerweise zwischen Zufuhrbereich und Hauptstrahlungsempfänger angeordnet sein, sodass der Zustrom in den Hauptstrahlungsempfänger geeignet gesteuert und/oder geregelt werden kann, um einen günstigen Wärmeübertrag von der empfangenen Solarstrahlung auf das erste Wärmeträgermedium zu erreichen.

Nach einer vorteilhaften Ausgestaltung der Vorrichtung kann der zweite Wärmeübertrager als bewegtes Partikelbett des ersten Wärmeträgermediums mit im Vergleich zu einem Querschnitt des Abfuhrbereichs größerem Querschnitt, insbesondere mindestens hundertfach größer, vorzugsweise mindestens tausendfach größer, und einer Betthöhe des Partikelbetts mit einem Verhältnis von Radius/Höhe>1 für einen hohen Durchsatz des zweiten Wärmeträgermediums bei gleichzeitig geringem Strömungswiderstand ausgebildet sein.

Beispielsweise kann der Querschnitt des Partikelbetts in einer Ausgestaltung mindestens 0,5 m² betragen.

Dem erhitzten ersten Wärmeträgermedium kann im zweiten Wärmeübertrager zur Reduktion des Oxidmaterials zu einem reduzierten Oxidmaterial kontinuierlich Spülgas zugeführt und erhitztes Spülgas für eine Wärmerückgewinnung und/oder Vorwärmung des ersten Wärmeträgermediums, bevor dieses in den Hauptstrahlungsempfänger geleitet wird, abgeführt werden. Das reduzierte Oxidmaterial wird dabei abgekühlt. Darüber hinaus hat das Durchströmen des Spülgases durch das bewegte Partikelbett des reduzierten Oxidmaterials im zweiten Wärmeübertrager den Vorteil, dass eine Rück-Oxidation des reduzierten Oxidmaterials einerseits durch die Abkühlung und andererseits durch das Herabsetzen des Sauerstoffpartialdrucks vermieden bzw. verringert werden kann.

Nach einer vorteilhaften Ausgestaltung der Vorrichtung kann der Abfuhrbereich des ersten Wärmeträgermediums so ausgebildet sein, dass sich ein hoher Strömungswiderstand für das zweite Wärmeträgermedium und damit ein geringer Stoffstrom des zweiten Wärmeträgermediums von weniger als 0,1 vol% des gesamten Stoffstroms des zweiten Wärmeträgermediums in den Abfuhrbereich des ersten Wärmeträgermediums ergibt. Insbesondere kann dabei der Abfuhrbereich als bewegtes Partikelbett mit einem Leeraumvolumenanteil von höchstens 0,5 mit einer Querschnittsfläche von höchstens 4 cm², insbesondere rohrförmig, bei einem Rohrdurchmesser von etwa 2 cm, mit einer Betthöhe der Partikelbetts mit einem Verhältnis von Radius/Höhe<0.01, ausgebildet sein.

Die Querschnittsfläche kann bei einem günstigen Rohrinnendurchmesser von etwa 2 cm im Bereich zwischen mindestens 3 cm² und höchstens 4 cm² liegen.

Vorteilhaft kann der Abfuhrbereich eine große Länge im Vergleich zur Betthöhe im Wärmeübertrager aufweisen, insbesondere etwa 2 m Länge im Vergleich zu etwa 10 cm Betthöhe im Wärmeübertrager.

Eine Drucktrennung zwischen dem Hauptstrahlungsempfänger und dem reagierenden und bewegten Partikelbett kann günstigerweise über ein dichtes Partikelbett stattfinden, das in einem Rohr mit engem Querschnitt in das reagierende, bewegte Partikelbett mit breitem Querschnitt fließt. Um Gase wie gewünscht fließen zu lassen, können die Querschnittsflächen der bewegten Partikelbetten entsprechend gestaltet werden.

Nach einer vorteilhaften Ausgestaltung der Vorrichtung kann im ersten Kreislauf eine Transporteinrichtung, insbesondere ein isolierter Behälter, zwischen dem Oxidationsreaktor und dem ersten Wärmeübertrager zum Transport des ersten Wärmeträgermediums von dem Oxidationsreaktor zu dem ersten Wärmeübertrager angeordnet sein. Auf diese Weise kann der erste Kreislauf mit dem ersten Wärmeträgermedium vorteilhaft geschlossen werden und das heiße erste Wärmeträgermedium möglichst wärmeverlustarm im Kreisprozess geführt werden.

Nach einer vorteilhaften Ausgestaltung der Vorrichtung kann an der Apertur des Hauptstrahlungsempfängers ein Sekundärkonzentrator für die Solarstrahlung angeordnet sein. Insbesondere kann dabei die Apertur von einem Sekundärkonzentrator umgeben sein. Zweckmäßigerweise kann ein, beispielsweise trichterförmig um die Apertur angeordneter, Spiegel verwendet werden, welcher das Sonnenlicht zusätzlich in die Apertur des Hauptstrahlungsempfängers leitet. So kann die Konzentration der Solarstrahlung in der Apertur erhöht und die Menge des in die Apertur einfallenden Lichts erhöht werden. Die von einem Kühlmedium des Sekundärkonzentrators aufgenommene Wärme kann beispielsweise zur Vorwärmung des Oxidatormediums, insbesondere zur Vorwärmung von Wasser, verwendet werden.

Alternativ oder zusätzlich kann an der Apertur des Haupt-Strahlungsempfängers, insbesondere um den Sekundärkonzentrator, falls vorhanden, ein Nebenstrahlungsempfänger für Solarstrahlung angeordnet sein. Nicht in die Apertur des Hauptstrahlungsempfängers eintretende konzentrierte Solarstrahlung, auch Spillage genannt, kann günstigerweise über diesen optionalen Nebenstrahlungsempfänger im Prozess verwendet werden. Dabei können Rohrleitungen um die Apertur des Hauptstrahlungsempfängers oder bei Einsatz eines Sekundärkonzentrators um diesen herum angeordnet sein, in denen ein weiteres Wärmeträgermedium, beispielsweise Flüssigsalz oder Dampf von der Spillage des Hauptstrahlungsempfängers erhitzt wird. Auch kann Luft als Wärmeträgermedium in einem Nebenstrahlungsempfänger, der wie in der DE 19744541 A1 gezeigt offenvolumetrisch sein kann, genutzt werden. Im Prozess kann die Wärme insbesondere zur Stromerzeugung, zur Vorwärmung des Oxidatormediums, speziell zur Verdampfung und Überhitzung von Wasser, oder zur Verdichtung und weiteren Prozessierung der Produktgase genutzt werden.

Nach einer vorteilhaften Ausgestaltung der Vorrichtung kann an den Oxidationsreaktor ein Separator zur Abtrennung von Wasserstoff angeschlossen sein. Auf diese Weise kann aus dem im Oxidationsreaktor gewonnenen Produktgas Wasserstoff zur weiteren Verwendung abgetrennt werden. Flüssiges Wasser kann günstigerweise wieder in die Dampfphase überführt werden und als Oxidatorgas wieder dem Oxidationsreaktor zugeführt werden.

Vorteilhaft kann der zweite Kreislauf eine Zufuhr für Spülgas, insbesondere stromab der Reinigungseinheit, aufweisen. So können etwaige Verluste an Spülgas, beispielsweise durch den Abfuhrbereich in den offenen Hauptstrahlungsempfänger, durch Einblasen kleiner Mengen frischen Spülgases ersetzt werden.

Nach einer vorteilhaften Ausgestaltung der Vorrichtung kann der erste Wärmeübertrager als gaspermeables Rohr ausgebildet sein, in dessen Innerem das erste Wärmeträgermedium enthalten ist und das Spülgas als zweites Wärmeträgermedium kann durch eine Außenseite des Rohrs in das Rohr eintreten und austreten. Dadurch kann auf sehr effektive Weise Wärme von dem erhitzten Spülgas auf das erste Wärmeträgermedium übertragen und dieses vorgewärmt werden. Außerdem kann dadurch auch eine leichte Reduktion des ersten Wärmeträgermediums durch das Spülgas stattfinden. Etwaige Verunreinigungen des Spülgases, beispielsweise durch Sauerstoff, können in der darauf folgenden Reinigungseinheit durch eine Spülgasreinigung im heißen Zustand, beispielsweise mittels einer keramischen Membran, abgetrennt werden. Sauerstoffionen lassen sich durch Anlegen einer elektrischen Spannung an die Membran abpumpen.

Nach einem weiteren Aspekt der Erfindung wird ein Verfahren zum Durchführen eines Redox-Kreisprozesses mit einer Vorrichtung vorgeschlagen, wobei in einem ersten Kreislauf ein erstes Wärmeträgermedium in einem Hauptstrahlungsempfänger mit Solarstrahlung erhitzt, in einem zweiten Wärmeübertrager mittels eines in einem zweiten Kreislauf geführten Spülgases chemisch reduziert und in einem Oxidationsreaktor anschließend wieder oxidiert wird. Dabei wird in dem zweiten Kreislauf das Spülgas als zweites Wärmeträgermedium in dem zweiten Wärmeübertrager erhitzt, und in einem ersten Wärmeübertrager durch Vorwärmen des ersten Wärmeträgermediums vor Eintritt in den Hauptstrahlungsempfänger wieder abgekühlt, und in einer Reinigungseinheit gereinigt.

Vorteilhaft kann das erste Wärmeträgermedium ein Oxidmaterial als Redoxmaterial, insbesondere ein Metalloxid, insbesondere Ceroxid, aufweisen und fließfähig oder rieselfähig sein. Insbesondere kann dabei das erste Wärmeträgermedium durch Partikel gebildet sein.

Nach dem vorgeschlagenen Verfahren wird das bewegliche Redox-Material des Redox-Kreisprozesses in dem ersten Kreislauf geführt, während das Spülgas zur Reduzierung des Sauerstoffpartialdrucks in dem zweiten Kreislauf geführt wird. Die beiden Kreisläufe sind weitestgehend getrennt geführt. Insbesondere führt der zweite Kreislauf mit dem Spülgas nicht durch den Hauptstrahlungsempfänger. Die beiden Kreisläufe sind nur an dem zweiten Wärmeübertrager, nämlich zur Reduktion des ersten Wärmeträgermediums, wo auch Wärme von dem ersten Wärmeträgermedium auf das Spülgas übertragen wird, sowie an dem ersten Wärmeübertrager zum Vorwärmen des ersten Wärmeträgermediums durch das erhitzte Spülgas, bevor das erste Wärmeträgermedium in den Hauptstrahlungsempfänger geleitet wird, miteinander gekoppelt.

Das Spülgas hat somit auch die Funktion eines Wärmeträgers. Somit kann der Redox-Kreisprozess in besonders vorteilhafter Weise durchgeführt werden, da der in herkömmlichen Verfahren kritisierte hohe Spülgasstrom durch die Doppelfunktion des Spülgases effektiver genutzt werden kann. Darüber hinaus kann die bisher ungenutzte Wärmeenergie in dem Spülgas ebenfalls genutzt werden. Bei dem Redox-Prozess wird somit sensible Wärme des reduzierten Oxidmaterials als erstes Wärmeträgermedium und des Spülgases rückgewonnen.

Der Reduktionsschritt des ersten Wärmeträgermediums findet so vorteilhaft nicht im Hauptstrahlungsempfänger statt, sondern nachgelagert in einem bewegten, von dem Spülgas durchströmten, Partikelbett des ersten Wärmeträgermediums im zweiten Wärmeübertrager.

Eine Drucktrennung zwischen dem Hauptstrahlungsempfänger und dem reagierenden und bewegten Partikelbett findet dabei nicht über Ventile oder ähnliche mechanische Absperreinrichtungen statt, sondern günstigerweise über ein dichtes Partikelbett, das in einem Rohr mit engem Querschnitt in das reagierende, bewegte Partikelbett mit breitem Querschnitt fließt. Um Gase wie gewünscht fließen zu lassen, können die Querschnittsflächen der bewegten Partikelbetten entsprechend gestaltet werden.

Simulationsrechnungen weisen einen Wirkungsgrad von bis zu 27 % auf, der deutlich über dem Stand der Technik liegt.

Nach einer vorteilhaften Ausgestaltung des Verfahrens kann das erste Wärmeträgermedium dem Hauptstrahlungsempfänger über einen Zufuhrbereich zugeführt werden. Dabei kann das erhitzte erste Wärmeträgermedium aus dem Hauptstrahlungsempfänger über einen Abfuhrbereich dem zweiten Wärmeübertrager zugeführt werden, während Oxidatorgas dem reduzierten ersten Wärmeträgermedium in dem Oxidationsreaktor zum Oxidieren des reduzierten ersten Wärmeträgermediums zugeführt werden kann, wobei ein Produktgas freigesetzt wird. Insbesondere der Abfuhrbereich kann als enges Rohr mit kleinem Querschnitt ausgebildet sein, sodass nur geringe Stoffströme des zweiten Wärmeträgermediums bei entsprechend hohem Strömungswiderstand fließen.

Nach einer vorteilhaften Ausgestaltung des Verfahrens kann ein Durchfluss des ersten Wärmeträgermediums durch den Hauptstrahlungsempfänger über ein oder mehrere Einrichtungen zur Beeinflussung des Durchflusses eingestellt werden. Eine solche Einrichtung zur Regelung des Durchflusses kann günstigerweise zwischen Zufuhrbereich und Hauptstrahlungsempfänger angeordnet sein, sodass der Zustrom in den Hauptstrahlungsempfänger geeignet gesteuert und/oder geregelt werden kann, um einen günstigen Wärmeübertrag von der empfangenen Solarstrahlung auf das erste Wärmeträgermedium zu erreichen.

Nach einer vorteilhaften Ausgestaltung des Verfahrens kann der Kreisprozess kontinuierlich durchlaufen werden. Beispielsweise kann so während des Erhitzens eines Teils des ersten Wärmeträgermediums zur Reduktion des Oxidmaterials zu einem reduzierten Oxidmaterial kontinuierlich Spülgas zugeführt und erhitztes Spülgas abgeführt werden. Die Förderung des Produktgases kann so günstigerweise ebenfalls kontinuierlich erfolgen, was die energetische Effizienz des Verfahrens günstig gestalten lässt.

Nach einer vorteilhaften Ausgestaltung des Verfahrens kann das Spülgas nach dem Vorwärmen des ersten Wärmeträgermediums und vor dem Zuführen in den zweiten Wärmeübertrager gereinigt werden. Etwaige Verunreinigungen des Spülgases, beispielsweise durch Sauerstoff, können in der Reinigungseinheit durch eine Spülgasreinigung im heißen Zustand, beispielsweise mittels einer keramischen Membran, abgetrennt werden. Sauerstoffionen lassen sich durch Anlegen einer elektrischen Spannung abpumpen.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Fig. 1: einen schematischen Ablauf des Verfahrens zum Durchführen eines Redox-Kreisprozesses nach einem Ausführungsbeispiel der Erfindung; und
- Fig. 2: eine schematische Darstellung einer Vorrichtung nach einem Ausführungsbeispiel der Erfindung zum Durchführen des Redox-Kreisprozesses nach Fig. 1.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

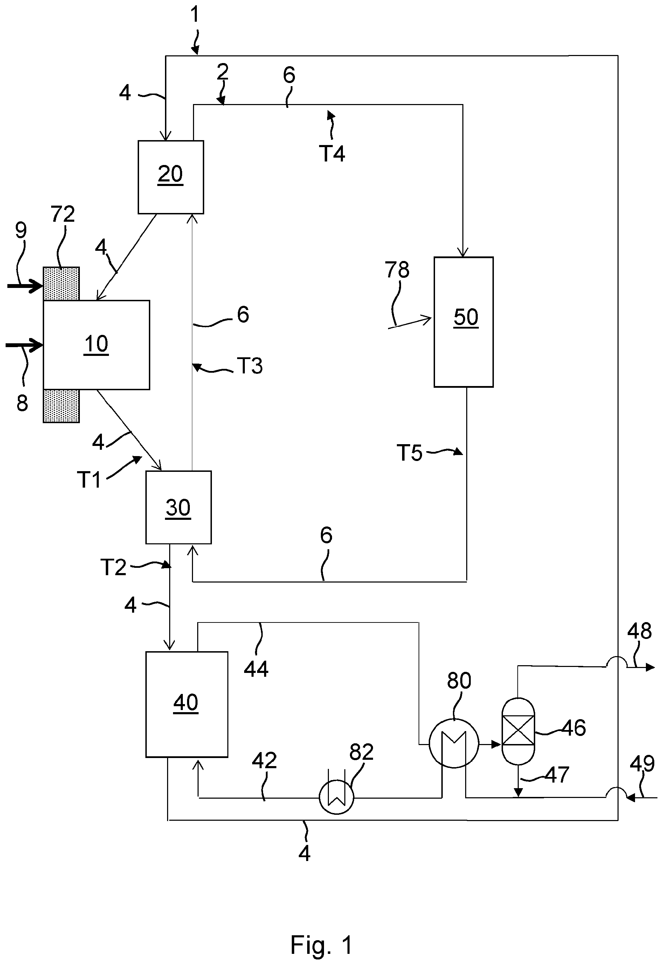

Figur 1 zeigt einen schematischen Ablauf des Verfahrens zum Durchführen eines Redox-Kreisprozesses nach einem Ausführungsbeispiel der Erfindung.

Gemäß dem Verfahren wird in einem ersten Kreislauf 1 ein erstes Wärmeträgermedium 4, welches ein Oxidmaterial als Redoxmaterial, beispielsweise ein Metalloxid, insbesondere Ceroxid, sein kann und welches fließfähig oder rieselfähig, insbesondere durch Partikel gebildet sein kann, in einem Hauptstrahlungsempfänger 10 mit Solarstrahlung 8 beispielsweise auf eine Temperatur T1 von 1450° C erhitzt. Danach wird das erste Wärmeträgermedium 4 in einem zweiten Wärmeübertrager 30 mittels eines in einem zweiten Kreislauf 2 geführten Spülgases 6 chemisch reduziert, wobei es auch auf eine Temperatur T2 von beispielsweise 900° C abgekühlt wird und in einem Oxidationsreaktor 40 anschließend wieder oxidiert. Aus dem Oxidationsreaktor 40 wird das erste Wärmeträgermedium 4 im Kreisprozess wieder dem ersten Wärmeübertrager 20 zugeführt, von wo es wieder dem Hauptstrahlungsempfänger 10 zugeführt werden kann.

Nicht in die Apertur 16 des Hauptstrahlungsempfängers 10 eintretende konzentrierte Solarstrahlung, auch Spillage 9 genannt, kann günstigerweise über einen optionalen Nebenstrahlungsempfänger 72 im Prozess verwendet werden. Dazu können Rohrleitungen um die Apertur 18 des Hauptstrahlungsempfängers 10 oder um den optionalen Sekundärkonzentrator 70 angeordnet sein, in denen ein weiteres Wärmeträgermedium, beispielsweise Flüssigsalz oder Dampf von der Spillage 9 des Hauptstrahlungsempfängers 10 erhitzt wird.

Das Spülgas 6, ein Inertgas, insbesondere Stickstoff, wird als zweites Wärmeträgermedium im zweiten Kreislauf 2 in dem zweiten Wärmeübertrager 30 beispielsweise auf eine Temperatur T3 von 1450° C erhitzt, und in einem ersten Wärmeübertrager 20 durch Vorwärmen des ersten Wärmeträgermediums 4 vor Eintritt in den Hauptstrahlungsempfänger 10 wieder auf eine Temperatur T4 von beispielsweise 900° C abgekühlt. Anschließend wird das Spülgas 6 in einer Reinigungseinheit 50, beispielsweise von Sauerstoffverunreinigungen, gereinigt. Das Spülgas 6 kann so vorteilhaft nach dem Vorwärmen des ersten Wärmeträgermediums 4 und vor dem Zuführen in den zweiten Wärmeübertrager 30 gereinigt werden. Dazu kann der Reinigungseinheit 50 elektrische Leistung 78 zugeführt werden, indem eine elektrische Spannung an eine keramische Membran angelegt wird, um durch die Membran Sauerstoffionen zu fördern und so den Sauerstoff von dem Spülgas abzutrennen. Die Temperatur T5 des Spülgases 6 nach dem Reinigungsprozess kann immer noch 900° C betragen.

In dem Oxidationsreaktor 40 wird dem reduzierten ersten Wärmeträgermedium 4 Oxidatorgas 42, beispielsweise Wasserdampf, zum Oxidieren des reduzierten ersten Wärmeträgermediums 4 zugeführt. Beim Oxidationsprozess wird ein Produktgas 44, insbesondere Wasserstoff, oder Kohlenmonoxid, oder Synthesegas, freigesetzt. Das Produktgas 44 kann über einen Wärmeübertrager 80 einem Separator 46 zugeführt werden, welcher Wasserstoff 48 abtrennt und ableitet. Außerdem entsteht in dem Separator 46 flüssiges Wasser 47, welches in zusätzlich zugeführtes Wasser 49 eingeleitet und über den Wärmeübertrager 80 und einen weiteren Wärmeübertrager 82 verdampft wird. Hier kann beispielsweise die in dem optionalen Nebenstrahlungsempfänger 72 empfangene Wärme genutzt werden. Der Wasserdampf wird dann dem Oxidationsreaktor 40 als Oxidatorgas 42 zugeführt.

Ein Durchfluss des zweiten Wärmeträgermediums durch den Hauptstrahlungsempfänger 10 kann zumindest über Bereiche mit unterschiedlichem Strömungswiderstand im ersten Kreislauf 1 eingestellt werden.

Der Kreisprozess kann vorteilhaft kontinuierlich durchlaufen werden.

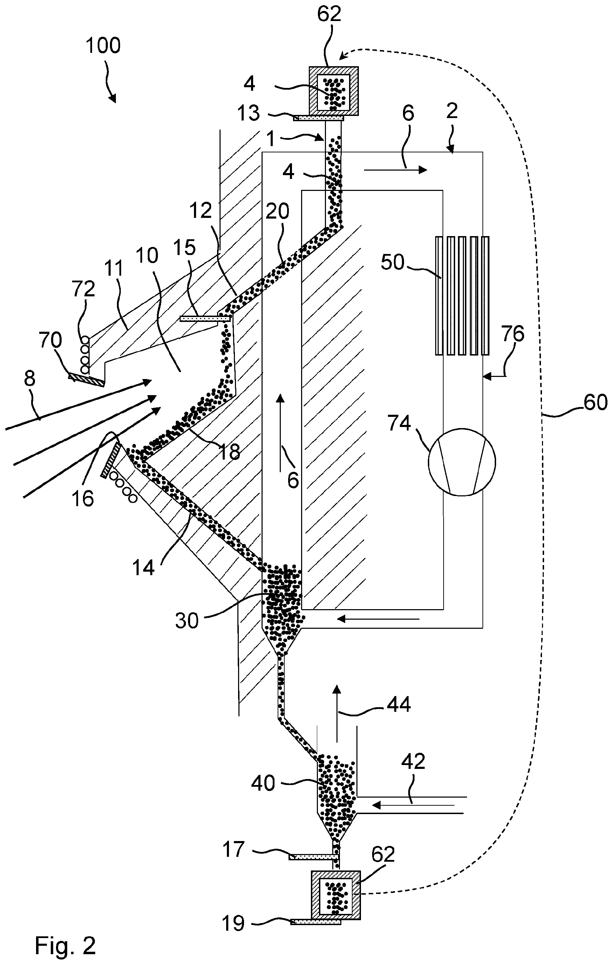

Figur 2 zeigt eine schematische Darstellung einer Vorrichtung 100 nach einem Ausführungsbeispiel der Erfindung zum Durchführen des Redox-Kreisprozesses nach Figur 1.

Die Vorrichtung 100 weist einen ersten Kreislauf 1 für ein erstes Wärmeträgermedium 4 und einen zweiten Kreislauf 2 für ein Spülgas 6 als zweitem Wärmeträgermedium auf. Der erste Kreislauf 1 führt in Strömungsrichtung des ersten Wärmeträgermediums 4 durch wenigstens einen ersten Wärmeübertrager 20, einen Hauptstrahlungsempfänger 10, einen zweiten Wärmeübertrager 30 und einen Oxidationsreaktor 40. Der zweite Kreislauf 2 verläuft zwischen dem ersten und zweiten Wärmeübertrager 20, 30 in einer Leitung, die am Hauptstrahlungsempfänger 10 vorbei geführt ist und führt in Strömungsrichtung des zweiten Wärmeträgermediums vom zweiten Wärmeübertrager 30 zum ersten Wärmeübertrager 20.

Der zweite Kreislauf 2 ist mit dem ersten Kreislauf 1 an dem ersten Wärmeübertrager 20 und/oder an dem zweiten Wärmeübertrager 30 gekoppelt. Dabei ist das erste Wärmeträgermedium 4 von dem zweiten Wärmeträgermedium durchströmt.

Der zweite Kreislauf 2 verläuft außerhalb des Hauptstrahlungsempfängers 10.

Der Hauptstrahlungsempfänger 10 weist einen Zufuhrbereich 12 zum Zuführen des ersten Wärmeträgermediums 4 zum Hauptstrahlungsempfänger 10 und einen Abfuhrbereich 14 zum Ableiten des erhitzten ersten Wärmeträgermediums 4 aus dem Hauptstrahlungsempfänger 10 sowie eine Apertur 16 für den Eintritt von Solarstrahlung 8, beispielsweise aus einem Heliostatfeld, in den Hauptstrahlungsempfänger 10 auf.

Der Abfuhrbereich 14 des ersten Wärmeträgermediums 4 kann vorteilhaft zur Erhöhung des Strömungswiderstandes für das zweite Wärmeträgermedium und für einen geringen Stoffstrom des zweiten Wärmeträgermediums von weniger als 0,1vol% des gesamten Stoffstroms des zweiten Wärmeträgermediums ausgebildet sein.

Insbesondere kann der Abfuhrbereich 14 als bewegtes Partikelbett mit einem Leeraumvolumenanteil von höchstens 0,5 mit einer Querschnittsfläche von höchstens 4 cm², insbesondere rohrförmig, bei einem Rohrdurchmesser von etwa 2 cm, mit einer Betthöhe der Partikelbetts mit einem Verhältnis von Radius/Höhe<0.01, ausgebildet sein.

Der zweite Wärmeübertrager 30 ist im ersten Kreislauf 1 in Strömungsrichtung des ersten Wärmeträgermediums 4 stromabwärts nach dem Hauptstrahlungsempfänger 10 angeordnet und zur chemischen Reduktion des ersten Wärmeträgermediums 4 ausgebildet. Dazu kann der zweite Wärmeübertrager 30 als bewegtes Partikelbett des ersten Wärmeträgermediums 4 mit im Vergleich zu einem Querschnitt des Abfuhrbereichs 14 größerem Querschnitt insbesondere mindestens hundertfach größer, vorzugsweise mindestens tausendfach größer, und einer Betthöhe des Partikelbetts mit einem Verhältnis von Radius/Höhe>1 für hohen Durchsatz des zweiten Wärmeträgermediums bei gleichzeitig geringem Strömungswiderstand ausgebildet sein.

Der erste Wärmeübertrager 20 ist im ersten Kreislauf 1 in Strömungsrichtung des ersten Wärmeträgermediums 4 stromaufwärts vor dem Hauptstrahlungsempfänger 10 angeordnet und zum Übertragen von Wärme des erhitzten Spülgases 6 auf das in den Hauptstrahlungsempfänger 10 einzuleitende erste Wärmeträgermedium 4 ausgebildet.

Der Oxidationsreaktor 40 ist im ersten Kreislauf 1 in Strömungsrichtung des ersten Wärmeträgermediums 4 stromabwärts nach dem zweiten Wärmeübertrager 30 angeordnet und zum Oxidieren des ersten Wärmeträgermediums 4 ausgebildet.

Im zweiten Kreislauf 2 ist optional eine Reinigungseinheit 50 zum Reinigen des Spülgases 6 in Strömungsrichtung des zweiten Wärmeträgermediums stromaufwärts vor dem zweiten Wärmeübertrager 30 angeordnet. Insbesondere kann die Reinigungseinheit 50 eine keramische Membran aufweisen.

Der zweite Kreislauf 2 kann eine Einrichtung 74, insbesondere ein Gebläse, zum Fördern des Spülgases 6 in den zweiten Wärmeübertrager 30 aufweisen.

Im ersten Kreislauf 1 sind ein oder mehrere Einrichtungen 15, beispielsweise ein Schieber 15, zur Beeinflussung eines Durchflusses des ersten Wärmeträgermediums 4 durch den Hauptstrahlungsempfänger 10 angeordnet.

Im ersten Kreislauf 1 ist eine Transporteinrichtung 60, insbesondere ein isolierter Behälter 62, zwischen dem Oxidationsreaktor 40 und dem ersten Wärmeübertrager 20 zum Transport des ersten Wärmeträgermediums 4 von dem Oxidationsreaktor 40 zu dem ersten Wärmeübertrager 20 angeordnet. Dazu können jeweils stromauf und stromabwärts des Behälters 62 ein entsprechender Absperrschieber 13, 17, 19 zum Absperren des ersten Kreislaufs 1 angeordnet sein.

An der Apertur 16 des Hauptstrahlungsempfängers 10 kann optional ein Sekundärkonzentrator 70, beispielsweise ein trichterförmiger Spiegel, für die Solarstrahlung 8 angeordnet sein. Insbesondere kann die Apertur 16 von dem Sekundärkonzentrator 70 umgeben sein. An der Apertur 16 kann optional ein Nebenstrahlungsempfänger 72 zur Nutzung nicht in die Apertur 16 einfallender Solarstrahlung, der sogenannten Spillage 9, angeordnet sein.

Der Oxidationsreaktor 40 weist eine Zufuhr für Oxidatorgas 42, insbesondere Wasser und/oder Kohlendioxid, auf. Weiter weist der Oxidationsreaktor 40 einen Ausgang für ein Produktgas 44, insbesondere Wasserstoff, oder Kohlenmonoxid, oder Synthesegas, auf.

An den Oxidationsreaktor 40 kann ferner ein Separator 46 zur Abtrennung von Wasserstoff aus dem Produktgas 44 angeschlossen sein.

Der erste Wärmeübertrager 20 kann als gaspermeables Rohr ausgebildet sein, in dessen Innerem das erste Wärmeträgermedium 4 angeordnet ist und in welchen das Spülgas 6 als zweites Wärmeträgermedium durch die Außenseite des Rohrs in das Rohr eintritt und austritt.

Weiter kann der zweite Kreislauf 2 eine Zufuhr 76 für Spülgas 6, insbesondere stromab der Reinigungseinheit 50, aufweisen. So können etwaige Verluste an Spülgas 6, beispielsweise durch den Abfuhrbereich 14 in den offenen Hauptstrahlungsempfänger 10, durch Einblasen kleiner Mengen frischen Spülgases 6 ersetzt werden.

Gemäß dem vorgeschlagenen Verfahren werden Redox-Partikel, beispielsweise Ceroxid, des ersten Wärmeträgermediums 4 in dem Hauptstrahlungsempfänger 10 auf Temperaturen von etwa 1500° C erhitzt. Der Hauptstrahlungsempfänger 10 ist bei dem gezeigten Ausführungsbeispiel mit einer geneigten Gleitfläche 18 dargestellt. Der Hauptstrahlungsempfänger 10 kann jedoch in verschiedenster Weise ausgeführt werden, beispielsweise auch als Fallfilmempfänger, Drehrohrempfänger oder Zentrifugalempfänger. Ein Fenster zum Eintreten der Solarstrahlung sowie zur thermischen Isolierung des Reaktionsraums des Hauptstrahlungsempfängers 10 wird nicht benötigt. Dies reduziert Fehleranfälligkeit und Kosten. Außerdem treten keine Reflektions- oder Absorptionsverluste an einer möglichen Scheibe auf.

Schwerkraftgetrieben bewegen sich die in dem Hauptstrahlungsempfänger 10 erhitzten Partikel des ersten Wärmeträgermediums 4 im Abfuhrbereich 14 in einem Rohr mit engem Querschnitt als dichtes Partikelbett in ein weiteres Partikelbett, das aber einen größeren Querschnitt aufweist, dem als Reduktionsreaktor ausgebildeten zweiten Wärmeübertrager 30.

Das weitere Partikelbett wird von unten mit dem Spülgas 6, beispielsweise Stickstoff, durchströmt. Da der Druckverlust über das lange Partikelbett im dünnen Rohr des Abfuhrbereichs 4 deutlich größer ist als über das flache und breite Partikelbett des zweiten Wärmeübertragers 30, fließt nur ein verschwindend geringer Anteil des Spülgases 6, beispielsweise weniger als 0,1 % in den Hauptstrahlungsempfänger 10.

Der Großteil des Spülgases 6 strömt in einem Rohr mit großem Querschnitt nach oben und tritt durch eine permeable Fläche oder Rohr des ersten Wärmeübertragers 20, auf der oder durch das zu erhitzende Redoxpartikel des ersten Wärmeträgermediums 4 fließen. Diese werden durch das Spülgas 6 vorgewärmt.

Um den Spülgasstrom wie gewünscht zu lenken, wird das erste Wärmeträgermedium 4 danach in einem dünnen Rohr des Zufuhrbereichs 12 mit hohem Strömungswiderstand für das Spülgas 6 wieder dem Hauptstrahlungsempfänger 10 zugeführt.

Das Spülgas 6 wird anschließend bei Temperaturen um 900° C aufgereinigt, beispielsweise durch eine keramische Membran der Reinigungseinheit 50. Kleine Mengen frischen Spülgases können über die Zufuhr 76 eingebracht werden, um Verluste, beispielsweise zum Hauptstrahlungsempfänger 10, auszugleichen.

Das Gebläse 74 fördert das frische Spülgas 6 wiederum in den zweiten Wärmeübertrager 30 als Reduktionsreaktor. Die Partikel des ersten Wärmeträgermediums 4 werden vom Spülgas 6 im Gegenstrom reduziert, und außerdem abgekühlt. Das hat den Vorteil, dass eine Rückoxidation des ersten Wärmeträgermediums 4 verhindert wird.

Die reduzierten Partikel des ersten Wärmeträgermediums 4 bewegen sich durch die Schwerkraft in einem weiteren Rohr mit dünnem Querschnitt in den Oxidationsreaktor 40, in den ein Oxidatorgas 42 eingeleitet wird, beispielsweise Wasserdampf, Kohlendioxid oder eine Mischung dieser Gase. Die Partikel werden oxidiert und Wasserstoff, Kohlenmonoxid oder Synthesegas entsteht.

Die oxiderten Partikel, die noch eine Temperatur von etwa 900° C haben, werden über ein Transportsystem 60, beispielsweise in isolierten Behältern 62, wieder in eine bezüglich der Schwerkraftrichtung höhere Lage gebracht, von der aus sie dann wieder den Kreislauf durchlaufen.

### Bezugszeichen

- 1: erster Kreislauf
- 2: zweiter Kreislauf
- 4: erstes Wärmeträgermedium
- 6: Spülgas
- 8: Solarstrahlung
- 9: Spillage
- 10: Hauptstrahlungsempfänger
- 11: Isolation
- 12: Zufuhrbereich
- 13: Schieber
- 14: Abfuhrbereich
- 15: Einrichtung
- 16: Apertur
- 17: Schieber
- 18: geneigte Gleitfläche
- 19: Schieber
- 20: erster Wärmeübertrager
- 30: zweiter Wärmeübertrager
- 40: Oxidationsreaktor
- 42: Oxidatorgas
- 44: Produktgas
- 46: Separator
- 47: Wasser
- 48: Wasserstoff
- 49: Wasser
- 50: Reinigungseinheit
- 60: Transporteinrichtung
- 62: isolierter Behälter
- 70: Sekundärkonzentrator
- 72: Nebenstrahlungsempfänger
- 74: Einrichtung
- 76: Zufuhr Spülgas
- 78: elektrische Leistung
- 80: Wärmeübertrager
- 82: Wärmeübertrager
- 100: Vorrichtung

## Patentansprüche

1. Vorrichtung (100) zum Durchführen eines Redox-Kreisprozesses mit einem ersten Kreislauf (1) für ein erstes Wärmeträgermedium (4) und einem zweiten Kreislauf (2) für ein Spülgas (6) als zweitem Wärmeträgermedium,
wobei der erste Kreislauf (1) in Strömungsrichtung des ersten Wärmeträgermediums (4) durch wenigstens einen ersten Wärmeübertrager (20), einen Hauptstrahlungsempfänger (10), einen zweiten Wärmeübertrager (30) und einen Oxidationsreaktor (40) führt,
wobei der zweite Kreislauf (2) zwischen dem ersten und zweiten Wärmeübertrager (20, 30) in einer Leitung verläuft, die am Hauptstrahlungsempfänger (10) vorbei geführt ist und in Strömungsrichtung des zweiten Wärmeträgermediums vom zweiten Wärmeübertrager (30) zum ersten Wärmeübertrager (20) führt,
wobei der zweite Kreislauf (2) mit dem ersten Kreislauf (1) an dem ersten Wärmeübertrager (20) und/oder an dem zweiten Wärmeübertrager (30) gekoppelt ist, wobei das erste Wärmeträgermedium (4) von dem zweiten Wärmeträgermedium durchströmt ist.

2. Vorrichtung nach Anspruch 1, wobei im ersten Kreislauf (1) der erste Wärmeübertrager (20) in Strömungsrichtung des ersten Wärmeträgermediums (4) stromaufwärts vor dem Hauptstrahlungsempfänger (10) angeordnet ist.

3. Vorrichtung nach Anspruch 1 oder 2, wobei im ersten Kreislauf (1) der zweite Wärmeübertrager (30) in Strömungsrichtung des ersten Wärmeträgermediums (4) stromabwärts nach dem Hauptstrahlungsempfänger (10) angeordnet ist und zur chemischen Reduktion des ersten Wärmeträgermediums (4) ausgebildet ist.

4. Vorrichtung nach einem der vorhergehenden Ansprüche, wobei im ersten Kreislauf (1) der Oxidationsreaktor (40) in Strömungsrichtung des ersten Wärmeträgermediums (4) stromabwärts nach dem zweiten Wärmeübertrager (30) angeordnet ist und zum Oxidieren des ersten Wärmeträgermediums (4) ausgebildet ist.

5. Vorrichtung nach einem der vorhergehenden Ansprüche, wobei im zweiten Kreislauf (2) eine Reinigungseinheit (50) zum Reinigen des Spülgases (6) in Strömungsrichtung des zweiten Wärmeträgermediums stromaufwärts vor dem zweiten Wärmeübertrager (30) angeordnet ist, insbesondere wobei die Reinigungseinheit (50) eine keramische Membran aufweist.

6. Vorrichtung nach einem der vorhergehenden Ansprüche, wobei der Hauptstrahlungsempfänger (10) einen Zufuhrbereich (12) zum Zuführen des ersten Wärmeträgermediums (4) zum Hauptstrahlungsempfänger (10) und einen Abfuhrbereich (14) zum Ableiten des erhitzten ersten Wärmeträgermediums (4) aus dem Hauptstrahlungsempfänger (10) sowie eine Apertur (16) für den Eintritt von Solarstrahlung (8) in den Hauptstrahlungsempfänger (10) aufweist.

7. Vorrichtung nach einem der vorhergehenden Ansprüche, wobei im ersten Kreislauf (1) ein oder mehrere Einrichtungen (15) zur Beeinflussung eines Durchflusses des ersten Wärmeträgermediums (4) durch den Hauptstrahlungsempfänger (10) angeordnet sind.

8. Vorrichtung nach einem der vorhergehenden Ansprüche, wobei der zweite Wärmeübertrager (30) als bewegtes Partikelbett des ersten Wärmeträgermediums (4) mit im Vergleich zu einem Querschnitt des Abfuhrbereichs (14) größerem Querschnitt, insbesondere mindestens hundertfach größer, vorzugsweise mindestens tausendfach größer, und einer Betthöhe des Partikelbetts mit einem Verhältnis von Radius/Höhe>1, insbesondere für einen hohen Durchsatz des zweiten Wärmeträgermediums bei gleichzeitig geringem Strömungswiderstand, ausgebildet ist.

9. Vorrichtung nach einem der Ansprüche 6 bis 8, wobei der Abfuhrbereich (14) des ersten Wärmeträgermediums (4) so ausgebildet ist, dass sich ein hoher Strömungswiderstand für das zweite Wärmeträgermedium und damit ein geringer Stoffstrom des zweiten Wärmeträgermediums von weniger als 0,1 % des gesamten Stoffstroms des zweiten Wärmeträgermediums in den Abfuhrbereich (14) des ersten Wärmeträgermediums (4) ergibt, insbesondere wobei der Abfuhrbereich (14) als bewegtes Partikelbett mit einem Leeraumvolumenanteil von höchstens 0,5 mit einer Querschnittsfläche von höchstens 4 cm², insbesondere rohrförmig bei einem Rohrdurchmesser von etwa 2 cm, mit einer Betthöhe der Partikelbetts mit einem Verhältnis von Radius/Höhe<0.01, ausgebildet ist.

10. Vorrichtung nach einem der vorhergehenden Ansprüche, wobei im ersten Kreislauf (1) eine Transporteinrichtung (60), insbesondere ein isolierter Behälter (62), zwischen dem Oxidationsreaktor (40) und dem ersten Wärmeübertrager (20) zum Transport des ersten Wärmeträgermediums (4) von dem Oxidationsreaktor (40) zu dem ersten Wärmeübertrager (20) angeordnet ist.

11. Vorrichtung nach einem der vorhergehenden Ansprüche, wobei an der Apertur (16) des Hauptstrahlungsempfängers (10) ein Sekundärkonzentrator (70) für die Solarstrahlung (8) angeordnet ist, insbesondere wobei die Apertur (16) von einem Sekundärkonzentrator (70) umgeben ist, und/oder wobei an der Apertur (16) des Hauptstrahlungsempfängers (10), insbesondere um den Sekundärkonzentrator (70), falls vorhanden, ein Nebenstrahlungsempfänger (72) für Solarstrahlung angeordnet ist.

12. Vorrichtung nach einem der vorhergehenden Ansprüche, wobei an den Oxidationsreaktor (40) ein Separator (46) zur Abtrennung von Wasserstoff angeschlossen ist.

13. Vorrichtung nach einem der vorhergehenden Ansprüche, wobei der erste Wärmeübertrager (20) als gaspermeables Rohr ausgebildet ist, in dessen Innerem das erste Wärmeträgermedium (4) enthalten ist und das Spülgas (6) als zweites Wärmeträgermedium durch eine Außenseite des Rohrs in das Rohr eintritt und austritt.

14. Verfahren zum Durchführen eines Redox-Kreisprozesses mit einer Vorrichtung (100) nach einem der vorhergehenden Ansprüche, wobei in einem ersten Kreislauf (1) ein erstes Wärmeträgermedium (4) in einem Hauptstrahlungsempfänger (10) mit Solarstrahlung (8) erhitzt, in einem zweiten Wärmeübertrager (30) mittels eines in einem zweiten Kreislauf (2) geführten Spülgases (6) chemisch reduziert und in einem Oxidationsreaktor (40) anschließend wieder oxidiert wird,
wobei in dem zweiten Kreislauf (2) das Spülgas (6) als zweites Wärmeträgermedium in dem zweiten Wärmeübertrager (30) erhitzt, und in einem ersten Wärmeübertrager (20) durch Vorwärmen des Wärmeträgermediums (4) vor dessen Eintritt in den Hauptstrahlungsempfänger (10) wieder abgekühlt und in einer Reinigungseinheit (50) gereinigt wird.

15. Verfahren nach Anspruch 14, wobei das erste Wärmeträgermedium (4) dem Hauptstrahlungsempfänger (10) über einen Zufuhrbereich (12) zugeführt wird,
wobei das erhitzte erste Wärmeträgermedium (4) aus dem Hauptstrahlungsempfänger (10) über einen Abfuhrbereich (14) dem zweiten Wärmeübertrager (30) zugeführt wird,
wobei Oxidatorgas (42) dem reduzierten ersten Wärmeträgermedium (4) in dem Oxidationsreaktor (40) zum Oxidieren des reduzierten ersten Wärmeträgermediums (4) zugeführt wird, wobei ein Produktgas (44) freigesetzt wird.

16. Verfahren nach Anspruch 14 oder 15, wobei ein Durchfluss des ersten Wärmeträgermediums (4) durch den Hauptstrahlungsempfänger (10) über ein oder mehrere Einrichtungen (15) zur Beeinflussung des Durchflusses eingestellt wird.

17. Verfahren nach einem der Ansprüche 14 bis 16, wobei der Kreisprozess kontinuierlich durchlaufen wird.

18. Verfahren nach einem der Ansprüche 14 bis 17, wobei das Spülgas (6) nach dem Vorwärmen des ersten Wärmeträgermediums (4) und vor dem Zuführen in den zweiten Wärmeübertrager (30) gereinigt wird.
